Europäisches Patentamt

European Patent Office

Office européen des brevets

(19)

(11) **EP 0 803 340 B1**

(12) **EUROPEAN PATENT SPECIFICATION**

(45) Date of publication and mention
of the grant of the patent:
**05.02.2003  Bulletin 2003/06**

(51) Int Cl.[7]: **B29C 47/88**

(21) Application number: **96308240.9**

(22) Date of filing: **14.11.1996**

(54) **Producing method of a thermoplastic resin sheet and producing apparatus thereof**

Herstellungsverfahren von thermoplastischen Kunststofffolien und Herstellungsvorrichtung dafür

Procédé de fabrication pour une feuille en résine thermoplastique et dispositif de fabrication pour la mise en oeuvre

(84) Designated Contracting States:
**AT BE CH DE ES FR GB IT LI NL SE**

(30) Priority: **14.11.1995  JP 29564995**

(43) Date of publication of application:
**29.10.1997  Bulletin 1997/44**

(73) Proprietor: **IDEMITSU PETROCHEMICAL CO., LTD.**
**Minato-ku, Tokyo (JP)**

(72) Inventors:
 • **Fujii, Atsushi, Idemitsu Petrochem. Co., Ltd.**
   **Himeji-shi, Hyogo-ken (JP)**
 • **Funaki, Akira, Idemitsu Petrochem. Co., Ltd.**
   **Himeji-shi, Hyogo-ken (JP)**
 • **Yukumoto, Tohru, Idemitsu Petrochem. Co., Ltd.**
   **Himeji-shi, Hyogo-ken (JP)**
 • **Uchiyama, Katsumi,**
   **Idemitsu Petrochem. Co., Ltd.**
   **Himeji-shi, Hyogo-ken (JP)**

(74) Representative: **Rackham, Stephen Neil et al**
**GILL JENNINGS & EVERY,**
**Broadgate House,**
**7 Eldon Street**
**London EC2M 7LH (GB)**

(56) References cited:
**EP-A- 0 496 260         EP-A- 0 614 748**
**EP-A- 0 687 545         US-A- 3 988 098**

 • DATABASE WPI Section Ch, Week 9429 Derwent
   Publications Ltd., London, GB; Class A32, AN
   94-238143 XP002040629 & JP 06 170 919 A (IPEC
   KK) , 21 June 1994
 • PATENT ABSTRACTS OF JAPAN vol. 012, no.
   169 (M-699), 20 May 1988 & JP 62 284719 A
   (TOPPAN PRINTING CO LTD), 10 December
   1987,
 • DATABASE WPI Section Ch, Week 9634 Derwent
   Publications Ltd., London, GB; Class A32, AN
   96-337892 XP002040635 & JP 08 156 073 A
   (PLACO KK) , 18 June 1996
 • DATABASE WPI Section Ch, Week 9538 Derwent
   Publications Ltd., London, GB; Class A32, AN
   95-288997 XP002040636 & JP 07 186 244 A (IPEC
   KK) , 25 July 1995

**Description**

This invention relates to a producing method and a producing apparatus of a thermoplastic resin sheet, in which the obtained polypropylene resin sheet or film can be used for the packaging of food, medicine and so on.

Of late years, as a transparentizing art of sheet (or film) made out of polypropylene resin, various processes with the use of a metallic endless belt have been proposed.

The greatest advantage of the use of the metallic endless belt is the point that high-glossing of both faces of the sheet can be effectively obtained to continuously transfer a mirror face of the metallic endless belt onto the surface of the sheet.

In order to increase the transparency of the polypropylene resin sheet, however, in addition to the aforementioned high-glossing, it is required that haze (the degree of cloud) inside the sheet is reduced to a low level.

Conventionally, various methods and apparatus for improving the transparency have been proposed.

For example, according to Japanese Patent Application Laid-open No. 6-170919, an apparatus for cooling and caking a fused sheet is disclosed, in which the metallic endless belt is provided to be wound on and between a metal roller and an elastic roller, covered with an elastic body on its surface, and after the sheet is guided into the area between the elastic roller and the cooling roller through the metallic endless belt, the sheet is, continuously, cooled while being pressed to a part of the circumference of the cooling roller.

In this case of the apparatus, the effect of immediately cooling the sheet pressed by the cooling roller and the metallic endless belt is insufficient, and in addition, hardness of the elastic body of the elastic roller is higher, so that the sheet is not touch-rolled on its face, with the result that a resin bank is produced or a fine transparency of the sheet cannot be obtained.

In Japanese Patent Application Laid-open No. 6-166089 and Japanese Patent Application Laid-open No. 6-170919, a method for cooling the sheet using the same method after the metallic endless belt is provided to be wound on and between the metal roller and the elastic roller covered with the elastic body on its surface is disclosed, however, the cooling temperature is higher and hardness of the elastic is higher, so that the immediate cooling effect is insufficient, with the result that the transparent polypropylene sheet cannot be obtained without the use of raw materials consisting of a nucleating agent.

Further, according to Japanese Patent Application Laid-open No. 6-55613, a producing method of a thermoplastic resin sheet is disclosed, in which the sheet of the fusing state, consisting of a nucleating agent or the like, is guided into an area between the cooling roller and the metallic endless belt, and after the sheet is moved while being touched to the colling roller and the metallic endless belt, the sheet is pressed against the cooling roller from the inside of the metallic endless belt by the aforementioned cooling roller.

In this case of the producing method, the immediate cooling of the sheet starts after the sheet is sandwiched between the cooling roller and the metallic endless belt, so that at the starting point of the immediate cooling, the face pressure is insufficient, with the result that it is difficult to obtain a fine effect of the immediate cooling and a fine surface gloss on the sheet. As a result, the transparency has tried to be improved by adding a nucleating agent or the like, but the degree of transparency may be insufficient if the nucleating agent or the like is not added.

EP-A-0496260 discloses a process for producing a polypropylene sheet or film comprising passing a molten sheet or film comprising polypropylene and at least one additive between two opposed cooling rollers maintained at 10 to 50°C and adapted to convey therebetween a metallic endless belt while carrying the sheet or film on the endless belt.

JP6-2284719 discloses a process wherein an extruded film or sheet is passed between two endless belts, each wound between a pair of cooling rollers, and between further cooling rollers located between the pairs of cooling rollers.

A first aspect of the present invention is a method of producing a thermoplastic resin sheet, using a producing apparatus in which a metallic endless belt having a mirror face on the surface is provided to be wound on and between a first cooling roller, covered with an elastic member on the surface, and a second cooling roller, and a third cooling roller, having a mirror face on the surface and touching the first cooling roller through a molten thermoplastic resin sheet and the metallic endless belt is provided to hold the molten thermoplastic resin sheet pressed against the metallic endless belt, comprising the steps of:

guiding the molten thermoplastic resin sheet into the area between the first and third cooling rollers to touch the metallic endless belt, touching the first cooling roller, and the third cooling roller at approximately the same time; touch-rolling the face and cooling the molten thermoplastic resin sheet by the first and third cooling rollers over an area of an angle θ1 from the centre of each of the first and third rollers while the elastic member is elastically deformed by a pressing force between the first and third cooling rollers giving a face pressure of 0. 1MPa to 20.0MPa; and cooling, subsequently, the molten thermoplastic resin sheet by touch-rolling the molten thermoplastic resin sheet on the face against the third cooling roller by the metallic endless belt over an angle θ2 from the centre of the third roller with a face pressure of 0.01 MPa to 0.5 MPa;

wherein the temperature of the metallic endless belt directly touching the molten thermoplastic resin sheet and the third cooling roller is retained to be less than 50°C and more than zero;

the third cooling roller is provided with temperature adjustment means and the resin sheet is cooled to a temperature of less than 50°C.

The aforementioned molten thermoplastic resin sheet is a thermoplastic resin sheet just after being formed by being extruded from an extruder.

The molten thermoplastic resin sheet in the present invention should be recognized as to also mean a film-state molten thermoplastic resin, too.

As the preferable thermoplastic resin, polyethylene, polypropylene, polyvinyl, chloride, polyvinyl, alcohol, polyethylene terephthalate, polyarylate, polyethylene- 2,6 naphthalate, polyethylene- α, β, bis (2-chlorophenoxyethane-4, 4'-dicarboxylate), polyphenylene oxide, polyester, polyphenylene sulfide, polyether ether ketone, aromaticpolyamide, polyarylate, polyimide, polyamide imide, polyether imide, syndiotactic polystyrene, biphenylether ketone, or the like can be used.

The recommended thermoplastic resin is a polypropylene resin.

As the aforementioned polypropylene resin, a homopolymer of polypropylene, a copolymer (random, block) with ethylene, a composition thereof or the like can be used. A random copolymer with ethylene is especially outstanding in the transparency. Incidentally, in the resin, a nucleating agent, it may consist of a sorbitol type, benzoic aluminium type, sodium type or the like.

And the sheet may be a single layer of thermoplastic resin or multi-layers including a layer of thermoplastic resin.

In the present invention, when the temperature of the metallic endless belt and the roller in order to cool the molten thermoplastic resin sheet exceeds 50 °C, a fine transparency cannot be obtained. More preferably, it is less than 30 °C. Further, when it is lower than zero, a water-droplet spot is produced on the sheet.

By guiding the molten thermoplastic resin sheet into the area between the first and third cooling rollers to touch the metallic endless belt, touching the first cooling roller, and the third cooling roller at approximately the same time, the molten thermoplastic resin sheet can be touch-rolled and cooled at the same time, resulting in the improved transparency of the thermoplastic resin sheet. It can be assumed, when the molten thermoplastic resin sheet is touched earlier to either the metallic endless belt or the cooling roller, before the mirror face is transferred onto both faces of the sheet, the cooling and caking of the molten thermoplastic resin sheet is advanced.

In the present invention, it is advisable that the degree of the surface roughness of the mirror face of the metallic endless belt and the roller is less than 0.5 S.

As for the material of the endless belt, stainless, carbon steel, titanium alloy or the like can be used. The thickness of the endless belt is selective, more preferably more than 0.3 mm from view of strength.

As for the material of the aforementioned elastic member, fluorine-type rubber, silicone-type rubber, EPDM or the like can be used. It is advisable that the thickness of the elastic member is more than 3 mm in order to obtain fine face pressure with the elastic deformation.

In the present invention, the aforementioned molten thermoplastic resin sheet is touch-rolled on its face and cooled with the elastic deformation of the aforementioned elastic member, resulting in the improved efficiency of the transfer of the mirror face and the cooling.

A second aspect of the present invention is a method of producing a thermoplastic resin sheet, using a producing apparatus in which a first metallic endless belt, having a mirror face, wound on and between a first cooling roller covered with an elastic member on the surface, and a second cooling roller and a second metallic endless belt, having a mirror face, wound on and between a third cooling roller and a fourth cooling roller are provided to run along side each other to sandwich a molten thermoplastic resin sheet, and an added-pressure means for both metallic endless belts is provided in a section where both metallic endless belts run alongside each other to sandwich the molten thermoplastic resin sheet, comprising the steps of:

guiding the molten thermoplastic resin sheet into the area between the first and second metallic endless belts to touch the first endless belt, touching the first cooling roller, and the second metallic endless belt, touching the third cooling roller, at approximately the same time while the temperature of the metallic endless belts directly touching the molten thermoplastic resin sheet is retained to be less than 50°C and more than zero the cooling rollers in touch with said metallic endless belts being provided with temperature adjustment means;

touch-rolling the face and cooling the molten thermoplastic resin sheet by the first and third cooling rollers over an area of an angle θ1 from the centre of each of the first and third rollers while the elastic member is elastically deformed by a pressing force between the first and third cooling rollers giving a face pressure of 0. 1MPa to 20.0MPa; and

cooling, subsequently, the molten thermoplastic resin sheet by touch-rolling the molten thermoplastic resin sheet on the face by the added-pressure means in a section where both metallic endless belts run alongside each other with a face pressure of 0.01 MPa to 0.5MPa;

wherein the resin sheet is cooled to a temperature of less than 50°C.

In the second invention, the third cooling roller may be covered with the elastic member on the surface of the third cooling roller.

That is to say, the first and third cooling rollers of the invention are covered with the elastic member on both surfaces.

In the second aspect, the added-pressure means for both metallic endless belts can be at least a pair of rollers located to sandwich both metallic endless belts.

The number of pairs of rollers can be decided based on the length between the first and second rollers and between the third and fourth rollers.

The aforementioned pair of rollers may be located at a position to be opposed to each other by sandwiching both metallic endless belts or may be located at a position to be away from each other not to oppose each other by sandwiching both metallic endless belts.

In the second aspect, the added-pressure means for both metallic endless belts may be a roller located to cause both metallic endless belts to curve between the first and second rollers or between the third and fourth rollers.

Both metallic endless belts are selectively located to curve between the first and second rollers or between the third and fourth rollers, and in either case, the same effect of the added-pressure can be obtained.

When the face pressure is lower than 0.1 MPa or 0.01 MPa described above, the efficiency of transfer of the mirror face and the cooling become reduced. When the face pressure is higher than 20.0 MPa or 0.5 MPa described above, tension of the belt is higher, so that it is not preferable from the view of the life of the belt.

A producing apparatus of a thermoplastic resin sheet relating to a third aspect of the present invention, comprises:

a metallic endless belt having a mirror face, which is wound on and between a first cooling roller, covered with an elastic member and a second cooling roller; and

a third cooling roller having a mirror face and touching said first cooling roller through a molten thermoplastic resin sheet and said metallic endless belt which is provided to hold said molten thermoplastic resin sheet, pressed by said metallic endless belt;

wherein the first, second and third cooling rollers are arranged such that the thermoplastic resin sheet is first compressed between the third cooling roller and the metallic endless belt and the first cooling roller in an area of an angle θ1 from the centre of each of the first and third rollers with means provided for applying a face pressure of 0.1 MPa to 20 MPa, and subsequently it is held between the third roller and the metallic endless belt in an area of an angle θ2 from the centre of the third roller with means provided for applying a face pressure of 0.01 MPa to 0.5 MPa, and subsequently travels only in contact with the endless metallic belt, and then is touch-rolled to the second cooling roller through the endless metallic belt in an area of an angle θ3 from the centre of the cooling roller and wherein the third cooling roller is provided with temperature adjustment means and means are provided to maintain the temperature of the metallic endless belt, directly touching the molten thermoplastic resin sheet, and the third cooling roller at less than 50°C and more than zero, to cool the resin sheet to a temperature of less than 50°C.

That is to say, the third aspect of the invention is the producing apparatus used in order to carry out the producing method of the first aspect.

In the third aspect, it is advisable that the elastic member is less than 95 degrees, preferably 60 degrees of the hardness (reference to a type of JIS K6301 A).

When the hardness is more than 95 degrees, the elastic force is smaller, so that a resin bank is easily produced when the molten thermoplastic resin sheet is touched either by both the cooling roller and the metallic endless belt or by both of the metallic endless belts at approximately the same time.

In the accompanying drawings:

Fig. 1 is a diagrammatic view of a producing apparatus used in a producing method of a thermoplastic resin sheet according to a first embodiment of the present invention;

Fig. 2 is a diagrammatic view of a producing apparatus used in a producing method of a thermoplastic resin sheet according to a second embodiment of the present invention;

Fig. 3 is a diagrammatic view of a producing apparatus used in a producing method of a thermoplastic resin sheet according to a third embodiment of the present invention; and,

Fig. 4 is a diagrammatic view of a producing apparatus used in a producing method of a thermoplastic resin sheet according to a fourth embodiment of the present invention.

[FIRST EMBODIMENT]

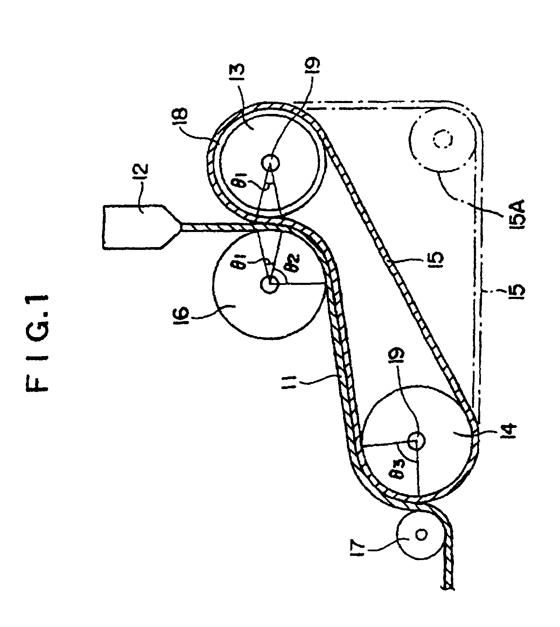

A method and an apparatus for producing a thermoplastic resin sheet 11 according to the present invention will be explained with reference to Fig. 1. In the following description of the present invention, a polypropylene resin is used as a preferable thermoplastic resin.

First of all, a structure of the apparatus for producing the polypropylene resin sheet 11 of the embodiment will be explained.

The producing apparatus is composed of a T-die 12 of an extruder, a metallic endless belt 15 wound on and between a first cooling roller 13 and a second cooling roller 14, a third cooling roller 16 connecting with the first cooling roller 13 through the polypropylene resin sheet 11 and the metallic endless belt 15, and a fourth roller 17 located adjacent to the second cooling roller 14.

Incidentally, as illustrated with a chain line in Fig. 1, the endless belt 15 may be further cooled to be touched with an additional cooling roller 15A, located in front of the first roller 13, from the inside face of the endless belt 15.

The aforementioned first cooling roller 13 is covered with an elastic member 18, such as fluorine-type rubber or the like, on its surface. The elastic member 18 is less than 95 degrees, preferably 60 degrees of the hardness (reference to a type of JIS K6301 A) and more than 3 mm in thickness.

The metallic endless belt 15 is made of stainless steel or the like, having a mirror face of less than 0.5 S of the surface roughness.

A rotating shaft 19 of at least one of the first and second cooling rollers 13 and 14 is coupled with a rotation driving means (not shown).

The aforementioned third cooling roller 16 also has a mirror face of less than 0.5 S of the surface roughness. The third cooling roller 16 touches the first cooling roller 13 through the polypropylene resin sheet 11 and the metallic endless belt 15, and further, is provided to hold therein the polypropylene resin sheet 11 which is pressed onto the side of the third cooling roller 16 by the endless belt 15. That is to say, the metallic endless belt 15 and the polypropylene resin sheet 11 touching the endless belt 15 curve to wind onto a part of the circumferential face of the third cooling roller 16.

The aforementioned fourth roller 17 guides the resin sheet 11 so that the polypropylene resin sheet 11 can be touch-rolled through the endless belt 15 to the second cooling roller 14.

Each of the aforementioned cooling rollers 13, 14 and 16 is provided with a temperature adjustment means (not shown), such as a water-cooling type, capable of adjusting the temperature of the surface.

A method for producing the polypropylene resin sheet 11 of the embodiment using the aforementioned producing apparatus will be explained below.

First, the temperature of each of the cooling rollers 13, 14 and 16 is controlled so that the surface temperatures of the metallic endless belt 15 and the third cooling roller 16, which are directly touched to the polypropylene resin sheet 11, can be retained to be less than 50 °C and more than zero.

And, the polypropylene resin sheet 11 extruded from the T-dic 12 of the extruder is guided into the area between the first and third cooling rollers 13 and 16 to touch with the endless belt 15, touching with the first cooling roller 13, and the third cooling roller 13 at approximately the same time, so that the resin sheet 11 is cooled to be less than 50 °C by being touch-rolled by the first and third cooling rollers 13 and 16. At this time, the elastic member 18 is elastically deformed by being compressed by a pressing force between the first and third cooling rollers 13 and 16, and further the resin sheet 11 is touch-rolled on its face by both of the rollers 13 and 16 in an area of an angle θ1 from the center of each of the rollers 13 and 16 on which the elastic materials are elastically deformed. The face pressure at this time is 0.1 MPa-20.0MPa.

Continuously, the polypropylene resin sheet 11 is cooled to be less than 50 °C by being touch-rolled onto the third cooling roller 16 by the endless belt 15 having a mirror face. The resin sheet 11, pressed against the cooling roller 16 by the endless belt 15, is held with the cooling roller 16 at an angle θ2 from the center of the cooling roller 16, so that the resin sheet 11 is touch-rolled on its face with the endless belt 15 and the third cooling roller 16 in the area of the holding angle θ2. The face pressure at this time is 0.01 MPa-0.5MPa.

Further, the polypropylene resin sheet 11 is moved to the second cooling roller 14 with the rotation of the endless belt 15 during the state the resin sheet 11 is along the endless belt 15 to lie on top of the other, and the resin sheet 11 is cooled to be less than 50 °C by being touch-rolled to the second cooling roller 14 through the endless belt 15. The resin sheet 11, pressed toward the cooling roller 14 by being guided by the fourth roller 17, is touch-rolled on its face to the endless belt 15 in an area of an angle θ3 from the center of the cooling roller 14. The face pressure at this time is 0.01MPa-0.5MPa.

According to the embodiment, by touch-rolling the face and cooling the sheet 11 with both of the rollers 13 and 16 and the endless belt 15 in the area of the angle θ1 of the first and third rollers 13 and 16 in which the elastic member 18 is elastically deformed, by touch-rolling the face and cooling the sheet 11 with the metallic endless belt 15 and the third cooling roller 16 in the area of the holding angle θ2, and by touch-rolling the face and cooling the sheet 11 with the endless belt 15 and the second cooling roller 14 in the area of the angle θ3, the high-transparent polypropylene resin sheet 11 can be produced at a high-speed.

[SECOND EMBODIMENT]

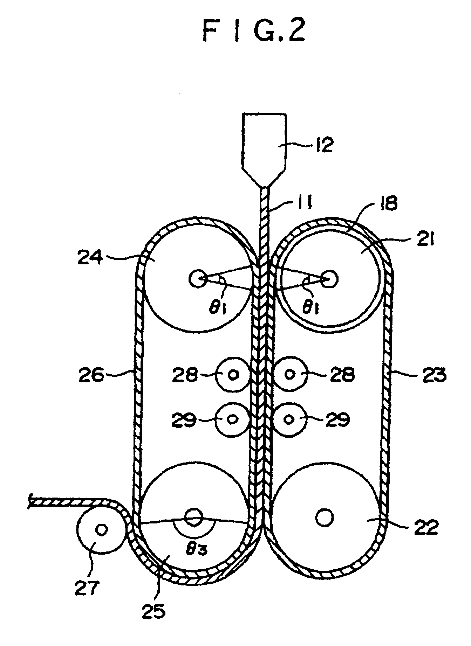

A preferred embodiment of a producing method and a producing apparatus of the polypropylene resin sheet 11 relating to the embodiment will be explained with reference to Fig. 2.

First of all, a structure of the producing apparatus of the embodiment will be described.

The producing apparatus is composed of the T-die 12 of an extruder, a first metallic endless belt 23 wound on a first cooling roller 21 and a second cooling roller 2, a second metallic endless belt 26 wound on a third cooling roller 24 and a fourth cooling roller 25, a fifth roller 27 provided adjacent to the fourth cooling roller 25, and two pairs of rollers 28 and 29 provided as an added-pressure means to the endless belts 23 and 26.

The aforementioned first cooling roller 21 is covered with the elastic member 18, such as fluorine-type rubber or the like, on its surface. The elastic member 18 is less than 95 degrees, preferably 60 degrees of the hardness (reference to a type of JIS K6301 A) and more than 3 mm in thickness.

The aforementioned first and second metallic endless belts 23 and 26 are provided to run along side each other to sandwich the polypropylene resin sheet 11 between the first and second rollers 21 and 22 and between the third and fourth rollers 24 and 25. The endless belts 23 and 26 are each made of stainless or the like and each have a mirror face of less than 0.5 S of the surface roughness.

Each of the aforementioned two pairs of rollers 28 and 29 as the adding-pressure means is provided to face to each other to be opposite of both of the endless belts 23 and 26 in the approximate central position between the first and second rollers 21 and 22 and between the third and fourth rollers 24 and 25. A slight space is provided between the upper and lower rollers 28 and 29. Incidentally, each of the two pairs of rollers 28 and 29 may be located to be away from each other not to oppose each other.

The aforementioned fifth roller 27 guides the resin sheet 11 so that the polypropylene resin sheet 11 is touch-rolled onto the fourth cooling roller 25 through the second endless belt 26.

Each of the aforementioned cooling rollers 21, 22, 24, and 25 is provided with a temperature adjustment means (not shown), such as a water-cooling type, capable of adjusting the temperature of the surface.

Next, a producing method of the polypropylene resin sheet 11 of the embodiment using the aforementioned producing apparatus will be explained.

The temperature of each of the cooling rollers 21, 22, 24 and 25 is controlled so that the surface temperature of the metallic endless belts 23 and 26, which are directly touched to the polypropylene resin sheet 11, can be retained to be less than 50 °C and more than zero.

The polypropylene resin sheet 11 extruded from the T-die 12 of the extruder is guided into the area between the first and second metallic endless belts 23 and 26 to touch the first endless belt 23 touching the first cooling roller 21 and the second metallic endless belt 26 touching the third cooling roller 24 at approximately the same time, so that the polypropylene resin sheet 11 is cooled to be less than 50 °C by being touch-rolled with the first and third cooling rollers 21 and 24. At this time, the elastic member 18 is elastically deformed to be compressed by a pressing force between the first and third cooling rollers 21 and 24, and the resin sheet 11 is touch-rolled on the face by both of the rollers 21 and 24 in an area of an angle θ1 from the center of each of the rollers 21 and 24 on which each elastic member 18 is elastically deformed. The face pressure at this time is 0.1MPa-20.0MPa.

Continuously, in a section in which both of the endless belts 23 and 26 run along side each other, the polypropylene resin sheet 11, sandwiched between both endless belts 23 and 26, is touch-rolled with two pairs of rollers 28 and 29 as the adding-pressure means so as to be cooled to be less than 50 °C. The resin sheet 11, sandwiched between both endless belts 23 and 26, is touch-rolled on the face by a pressing force with the pairs of rollers 28 and 29 in a section between the upper and lower rollers 28 to 29. The face pressure at this time is 0.01 MPa-0.5 MPa.

Next, the aforementioned polypropylene resin sheet 11 is moved toward the second and fourth cooling rollers 22 and 25 together with the rotation of both endless belts 23 and 26, and the resin sheet 11 touches the fourth cooling roller 25 through the second endless belt 26 so as to be cooled to be less than 50 °C. The polypropylene resin sheet 11, pressed to the side of the cooling roller 25 by being guided by the fifth roller 27, is touch-rolled on the face to the endless belt 26 in an area of an angle θ3 from the center of the cooling roller 25. The face pressure at this time is 0.01 MPa-0.5 MPa.

According to the embodiment, by touch-rolling the face and cooling the sheet 11 with both of the rollers 21 and 24 and the endless belts 23 and 26 in the area of the angle θ1 of the first roller 21, on which the elastic member 18 is elastically deformed, and the third roller 24, by touch-rolling the face and cooling the sheet 11 between the two pairs of rollers 28 and 29 as the adding-pressure means, and by touch-rolling the face and cooling the sheet 11 by the second metallic endless belt 26 and the fourth cooling roller 25 in the area of the angle θ3, the high-transparent polypropylene resin sheet 11 can be produced at a high-speed.

[THIRD EMBODIMENT]

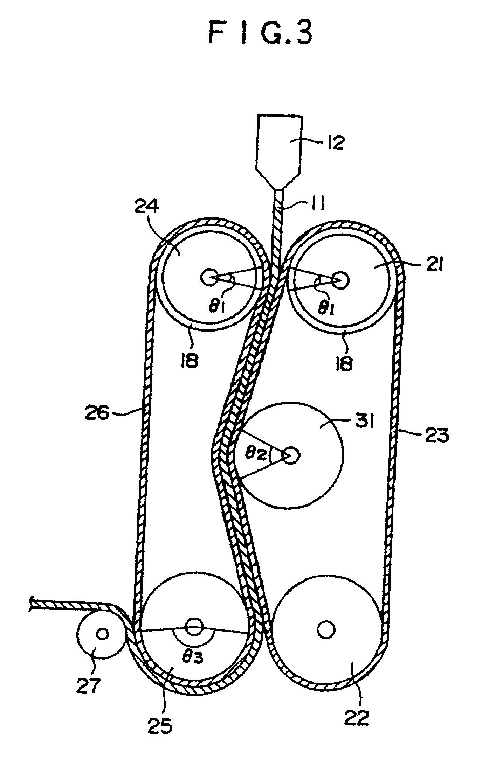

A preferred embodiment of a producing method and a producing apparatus of the polypropylene resin sheet 11 relating to the embodiment will be explained with reference to Fig. 3.

First of all, a structure of the producing apparatus of the embodiment will be described.

The producing apparatus has the following different points as compared with the producing apparatus of the second embodiment.

In the producing apparatus, the elastic member 18 is also covered on the surface of the third cooling roller 24.

Further, a roller 31 is used as the adding-pressure means to the endless belts 23 and 26, and in the approximate central position between the third and fourth rollers 24 and 25, the roller 31 is provided to cause both metallic endless belts 23 and 26 to curve toward the side of the third and fourth rollers 24 and 25. The roller 31 also has a cooling function.

The producing method of the polypropylene resin sheet 11 using the producing apparatus is the same as the second embodiment, but the only different points are the touch-roll on the face by the first and third rollers 21 and 24, and the touch-roll on the face in a section both of the endless belts 23 and 26 run along side each other.

More specifically, when the polypropylene resin sheet 11 extruded from the T-die 12 is guided into the area between the first and second endless belts 23 and 26 to touch the first endless belt 23 and the second endless belt 26 at approximately the same time, both elastic materials 18 are elastically deformed to be compressed by a pressing force between the first and third cooling rollers 21 and 24, so that the resin sheet 11 is touch-rolled on the face by both of the rollers 21 and 24 in the area of the angle θ1 from the centers of both of the rollers 21 and 24 in which the elastic materials 18 are elastically deformed. The face pressure at this time is 0.1 MPa-20.0 MPa.

When the polypropylene resin sheet 11 is moved from the side of the first and third rollers 21 and 24 to the side of the second and fourth rollers 22 and 25, the polypropylene resin sheet 11 pressed to the side of the aforementioned roller 31 by the second endless belt 26 is held with the roller 31 at the angle θ2, so that the resin sheet 11, sandwiched between the endless belts 23 and 26 in the area of the holding angle θ2, is touched on the face to be pressed to the side of the roller 31. The face pressure at this time is 0.01 MPa-.5 MPa.

According to the embodiment, by touch-rolling the face and cooling the sheet 11 with both of the rollers 21 and 24 and the endless belts 23 and 26 in the area of the angle θ1 of the first and third rollers 21 and 24 on which both elastic materials 18 are elastically deformed, by touch-rolling the face and cooling the sheet 11 with the second endless belt 26 and the roller 31 as the adding-pressure means in the area of the holding angle θ2, and by touch-rolling the face and cooling the sheet 11 with the second endless belt 26 and the fourth cooling roller 25 in the area of the angle θ3, the high-transparent polypropylene resin sheet 11 can be produced at a high-speed.

[FOURTH EMBODIMENT]

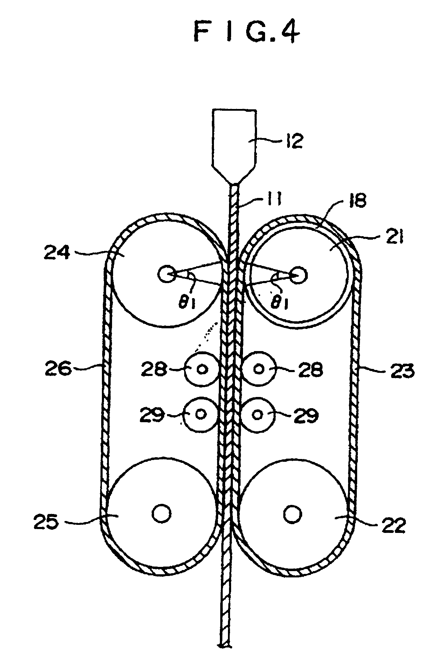

A preferred embodiment of the producing method and the producing apparatus of the polypropylene resin sheet 11 relating to the embodiment will be explained with reference to Fig.4.

The producing apparatus of the embodiment has the following different points as compared with the producing apparatus of the second embodiment.

The producing apparatus is structured not to be provided with the fifth roller 27 relating to the second embodiment, but to be, similarly, provided with the first cooling roller 21, the second cooling roller 22, the first metallic endless belt 23, the third cooling roller 24, the fourth cooling roller 25, the second metallic endless belt 26 and the two pairs of rollers 28 and 29 provided as the adding-pressure means.

The producing method of the polypropylene resin sheet 11, using the producing apparatus, is different from the first embodiment in not touch-rolling the face and cooling the sheet 11 by the second metallic endless belt 26 and the fourth cooling roller 25, relating to the second embodiment.

That is to say, the polypropylene resin sheet 11 extruded from the T-die 12 of the extruder is guided into the area between the first and second metallic endless belts 23 and 26 to touch the first metallic endless belt 23 and the second metallic endless belt 26 at approximately the same time, so that the polypropylene resin sheet 11 is touch-rolled by the first and third cooling rollers 21 and 24 so as to be cooled to be less than 50 °C, and continuously, the polypropylene resin sheet 11 sandwiched between both endless belts 23 and 26 is touch-rolled with the two pairs of rollers 28 and 29 to be cooled to be less than 50 °C.

According to the embodiment, by touch-rolling the face and cooling the resin sheet 11 with both of the rollers 21 and 24 and the endless belts 23 and 26 in the area of the angle θ1 of the first and third rollers 21 and 24 on which both elastic materials 18 are elastically deformed, and by touch-rolling the face and cooling the sheet 11 in the section between the two pairs of rollers 28 and 29 as the adding-pressure means, the high-transparent polypropylene resin sheet 11 can be produced at a high-speed.

[EXPERIMENT 1]

In the aforementioned first embodiment, the specific condition of the producing apparatus and the producing method will be defined as below.

The diameter of the extruder .... 90 mm, the width of the T-die .... 800 mm
Polypropylene resin .... IDEMITSU POLYPRO F-205S (a trade name, made by Idemitsu Petrochemical Co., Ltd.)
The thickness of the polypropylene resin sheet .... 0.3 mm
Material of the elastic member .... silicone rubber, thickness .... 10 mm, hardness .... 30 degrees
The sheet pull-down speed.... 16 m/min.
The temperature of the surface of the roller and the endless belt which touch the sheet .... 20-23 °C

[EXPERIMENT 2]

In the producing method of Experiment 1, only the raw material of the sheet is changed.
More specifically, the used resin is that IDEMITSU POLYPRO F-205S is added with 3,000 ppm of GELALL DH (made by Shin-Nippon Rikagaku Kabushi-Kaisha) as a nucleating agent.

[COMPARISON 1]

In the producing method (see Japanese Patent Application Laid-open No. 6-170919), in which the metallic endless belt is wound between a metal roller and an elastic roller covered with an elastic body on its surface, and the sheet is inserted into the area between the elastic roller and a cooling roller (80 °C) through the metallic endless belt (80 °C), and then the sheet is touch-rolled and cooled by the cooling roller and the belt after being touch-rolled on a part of the face of the cooling roller, the used raw material of resin is the aforementioned IDEMITSU POLYPRO F-205S.

[COMPARISON 2]

A producing method is the same as Comparison 1, but the used raw material for the sheet is Idemitsu Polypro F-205S which is added with the aforementioned GELALL DH.

[COMPARISON 3]

In the producing method (see German Patent 3319279A1, Japanese Utility Model Application Laid-open No. 3-6919), in which the metallic endless belt (30 °C) is wound between a metal roller (30 °C) and an elastic roller covered with an elastic body on its surface, and the sheet is inserted into the area between the elastic roller and a cooling roller through the metallic endless belt, and then the sheet is touch-rolled on a part of the face of the cooling roller, the used raw material of resin is the aforementioned IDEMITSU POLYPRO F-205S.
As to the aforementioned Experiments 1 and 2 and Comparisons 1 to 3, total haze and inner haze of the obtained polypropylene resin sheet is measured, and the surface glossiness of the face touched to the roller and the other face touched to the belt are measured. The results of the measurements will be described in the following Table 1.
Haze is found, with the use of a haze measuring instrument (e.g., NDH-300A, made by Nippon Denshoku Kougyoh Kabushi-Kaisha), from the following formula with a ratio of a total ray transmittance (Tt) signifying the total amount of rays transmitted by illuminating light on the sheet, and a diffused ray transmittance (Td) of diffused rays diffused by the sheet and transmitted. The aforementioned total ray transmittance (Tt) is the sum of a parallel ray transmittance (Tp) transmitted at the same axis as incident light and the diffused ray transmittance (Td).

$$\text{Haze (H)} = Td/Tt \times 100$$

The total haze is found from Tt and Td obtained when light is illuminated on the sheet. The inner haze is measured to eliminate any influence from the outside of the sheet by sandwiching both faces of the sheet with glass plates after silicone oil is coated on both faces of the sheet.

Total haze = inner haze + outer haze

The aforementioned surface glossiness is found from the following, with the use of an automatic colorimetric color-difference meter (e.g., AUD-CH-2 type-45,60, made by Suga Shikenki Kabushiki-Kaisha), from a ratio of reflected pencils ψ os from the surface of the glass of refractive index 1.567 and reflected pencils ψ s measured when light is illuminated on the sheet at the incident angle 60 degrees and the reflected light is received at the same angle 60 degrees.

Surface glossiness (Gs) = (ψ s/ψ os) $\times$ 100

Table 1

| | Raw material of sheet | Total haze (%)/inner haze (%) | Surface glossiness (%) | |
|---|---|---|---|---|
| | | | roller side | belt side |
| Experiment 1 | polypropylene (PP) | 3.4/2.4 | 148 | 151 |
| Experiment 2 | PP + nucleating agent | 2.4/1.3 | 150 | 150 |
| Comparison 1 | PP | 20.6/18.5 | 137 | 138 |
| Comparison 2 | PP + nucleating agent | 7.6/2.6 | 145 | 149 |
| Comparison 3 | PP | 12.4/6.8 | 147 | 121 |

From Table 1, according to Experiment 1, the polypropylene resin sheet 11 is produced by touch-rolling the face and cooling the sheet 11 with both of the rollers 13 and 16 and the metallic endless belt 15 in the area of the angle θ1 of the first and third rollers 13 and 16 on which the elastic member 18 is elastically deformed, by touch-rolling the face and cooling the sheet 11 with the metallic endless belt 15 and the third cooling roller 16 in the area of the holding angle θ2, and by touch-rolling the face and cooling the sheet 11 with the endless belt 15 and the second cooling roller 14 in the area of the angle θ3, with the result that it is understood that the polypropylene resin sheet 11, having low total haze and inner haze but high-transparency, can be obtained even when being produced at a high-speed. Incidentally, it is seen that the surface glossiness is high on both faces of the roller and belt sides.

According to Experiment 2, the obtained polypropylene resin sheet 11 has similar character to Experiment 1, but the haze is slightly further improved than Experiment 1. Therefore, according to the present invention, by adding nucleating agent into the raw material of resin, the transparency of the sheet can be further improved.

On the other hand, according to Comparison 1, sufficient face-pressure is added in the starting point of immediate cooling, so that the fine effect of the immediate cooling is hardly obtained, with the result that the transparency of the obtained sheet is low and also the surface glossiness is low.

According to Comparison 2, by adding the nucleating agent into the raw material of resin, the improvement of the transparency and the surface glossiness of the obtained sheet appears somewhat as compared with Comparison 1.

According to Comparison 3, since a section of face-pressure between the sheet and the metallic endless belt is short, it is understood that the transparency of the obtained sheet is insufficient and the surface glossiness of the face of the belt side of the sheet is low.

**Claims**

1. A method of producing a thermoplastic resin sheet (11), using a producing apparatus in which a metallic endless belt (15) having a mirror face on the surface is provided to be wound on and between a first cooling roller (13), covered with an elastic member (18) on the surface, and a second cooling roller (14), and a third cooling roller (16), having a mirror face on the surface and touching the first cooling roller through a molten thermoplastic resin sheet (11) and the metallic endless belt (15) is provided to hold the molten thermoplastic resin sheet (11) pressed against the metallic endless belt (15), comprising the steps of:

   guiding the molten thermoplastic resin sheet (11) into the area between the first and third cooling rollers (13,16) to touch the metallic endless belt (15), touching the first cooling roller (13), and the third cooling roller (16) at approximately the same time;

touch-rolling the face and cooling the molten thermoplastic resin sheet (11) by the first and third cooling rollers (13,16) over an area of an angle θ1 from the centre of each of the first and third rollers (13,16) while the elastic member (18) is elastically deformed by a pressing force between the first and third cooling rollers (13,16) giving a face pressure of 0. 1MPa to 20.0MPa; and

cooling, subsequently, the molten thermoplastic resin sheet by touch-rolling the molten thermoplastic resin sheet (11) on the face against the third cooling roller (16) by the metallic endless belt (15) over an angle θ2 from the centre of the third roller (16) with a face pressure of 0.01 MPa to 0.5 MPa;

wherein the temperature of the metallic endless belt (15) directly touching the molten thermoplastic resin sheet (11) and the third cooling roller (16) is retained to be less than 50°C and more than zero;

the third cooling roller (16) is provided with temperature adjustment means and the resin sheet (11) is cooled to a temperature of less than 50°C.

2. A method of producing a thermoplastic resin sheet, using a producing apparatus in which a first metallic endless belt (23), having a mirror face, wound on and between a first cooling roller (21) covered with an elastic member (18) on the surface, and a second cooling roller (22) and a second metallic endless belt (26), having a mirror face, wound on and between a third cooling roller (24) and a fourth cooling roller (25) are provided to run along side each other to sandwich a molten thermoplastic resin sheet (11), and an added-pressure means (28,29) for both metallic endless belts (23,26) is provided in a section where both metallic endless belts run alongside each other to sandwich the molten thermoplastic resin sheet (11), comprising the steps of:

guiding the molten thermoplastic resin sheet (11) into the area between the first and second metallic endless belts (23,26) to touch the first endless belt (23), touching the first cooling roller (21), and the second metallic endless belt (26), touching the third cooling roller (24), at approximately the same time while the temperature of the metallic endless belts (23, 26) directly touching the molten thermoplastic resin sheet (11) is retained to be less than 50°C and more than zero, the cooling rollers (21,22,24,25) in touch with said metallic endless belts (23,26) being provided with temperature adjustment means;

touch-rolling the face and cooling the molten thermoplastic resin sheet (11) by the first and third cooling rollers (23,26) over an area of an angle θ1 from the centre of each of the first and third rollers (21,24) while the elastic member (11) is elastically deformed by a pressing force between the first and third cooling rollers (21,24) giving a face pressure of 0.1MPa to 20.0MPa; and

cooling, subsequently, the molten thermoplastic resin sheet (11) by touch-rolling the molten thermoplastic resin sheet (11) on the face by the added-pressure means (28,29) in a section where both metallic endless belts (24,26) run alongside each other with a face pressure of 0.01 MPa to 0.5MPa;

wherein the resin sheet (11) is cooled to a temperature of less than 50°C.

3. The producing method of the thermoplastic resin sheet according to claim 2, wherein the third cooling roller (24) is covered with the elastic member (18) on the surface of the third cooling roller.

4. The producing method of the thermoplastic resin sheet according to claim 2, wherein the added-pressure means for both metallic endless belts is at least a pair of rollers (28,29) located to sandwich both metallic endless belts (23,26).

5. The producing method of the thermoplastic resin sheet according to claim 2, wherein the added-pressure means for both metallic endless belts is a roller (31) located to cause both metallic endless belts (23,26) to curve between the first and second roller (21,22) or between the third and fourth rollers (23,25).

6. An apparatus for producing a thermoplastic resin sheet comprising:

a metallic endless belt (15) having a mirror face, which is wound on and between a first cooling roller (13), covered with an elastic member (18) and a second cooling roller (14); and

a third cooling roller (16) having a mirror face and touching said first cooling roller (13) through a molten thermoplastic resin sheet (11) and said metallic endless belt (15) which is provided to hold said molten thermoplastic resin sheet (11), pressed by said metallic endless belt (15);

wherein the first, second and third cooling rollers (13,14,16) are arranged such that the thermoplastic resin sheet (11) is first compressed between the third cooling roller (16) and the metallic endless belt (15) and the first cooling roller (13) in an area of an angle θ1 from the centre of each of the first and third rollers (13,16) with means provided for applying a face pressure of 0.1 MPa to 20 MPa, and subsequently it is held between the third roller (16) and the metallic endless belt (15) in an area of an angle θ2 from the centre of the third roller (16) with means provided for applying a face pressure of 0.01 MPa to 0.5 MPa, and subsequently travels only in contact with the endless metallic belt (15), and then is touch-rolled to the second cooling roller (14) through the endless metallic belt (15) in an area of an angle θ3 from the centre of the cooling roller (14) and wherein the third cooling roller (16) is provided with temperature adjustment means and means are provided to maintain the temperature of the metallic endless belt (15), directly touching the molten thermoplastic resin sheet (11), and the third cooling roller (16) at less than 50°C and more than zero, to cool the resin sheet (11) to a temperature of less than 50°C.

7. The producing apparatus of a thermoplastic resin sheet (11) according to claim 6, wherein said elastic member is less than 60° of the hardness with reference to a type of JIS K6301 A.

**Patentansprüche**

1. Verfahren zur Herstellung einer thermoplastischen Kunststoffolie (11) unter Verwendung einer Herstellungsvorrichtung, bei welcher ein metallischer Endlosriemen (15) mit einer verspiegelten Oberfläche bereitgestellt wird, um um eine erste Kühlwalze (13), die mit einem elastischen Element (18) auf der Oberfläche bedeckt ist, und eine zweite Kühlwalze (14) geschlungen zu werden, wobei eine dritte Kühlwalze (16) mit einer verspiegelten Oberfläche, die die erste Kühlwalze durch eine geschmolzene thermoplastische Kunststoffolie (11) und den metallischen Endlosriemen hindurch berührt, bereitgestellt wird, um die geschmolzene thermoplastische Kunststoffolie (11) gegen den metallischen Endlosriemen (15) gepreßt zu halten, und welches die folgenden Schritte umfaßt:

Zuführen der geschmolzenen Kunststoffolie (11) in den Bereich zwischen der ersten und dritten Kühlwalze (13, 16), um den metallischen Endlosriemen (15) zu berühren, wodurch die erste Kühlwalze (13) und die dritte Kühlwaze (16) zu ungefähr derselben Zeit berührt werden;

Kontaktabwalzen der Spiegeloberfläche und Abkühlen der geschmolzenen thermoplastischen Kunststoffolie (11) durch die erste und dritte Kühlwalze (13, 16) über den Bereich eines Winkels θ1 von der Mitte sowohl der ersten als auch der dritten Walze (13, 16), während das elastische Element (18) elastisch verformt wird durch eine Anpreßkraft zwischen der ersten und dritten Kühlwalze (13, 16), wobei ein Anpreßdruck von 0,1 MPa bis 20,0 MPa entsteht; und

anschließendes Abkühlen der geschmolzenen thermoplastischen Kunststoffolie durch Kontaktwalzen der geschmolzenen thermoplastischen Kunststoffolie (11) auf der Spiegelfläche gegen die dritte Kühlwalze (16) durch den metallischen Endlosriemen (15) über einen Winkel θ2 von der Mitte der dritten Walze (16) mit einem Anpreßdruck von 0,01 MPa bis 0,5 MPa;

wobei die Temperatur des metallischen Endlosriemens (15), welcher die geschmolzene thermoplastische Kunststoffolie (11) direkt berührt, sowie der dritten Kühlwalze (16) auf weniger als 50°C und mehr als Null gehalten wird; wobei die dritte Kühlwalze (16) mit Temperaturanpassungsmitteln versehen ist und die Kunststoffolie (11) auf eine Temperatur von weniger als 50°C abgekühlt wird.

2. Verfahren zum Herstellen einer thermoplastischen Kunststoffolie, bei welchem eine Herstellvorrichtung verwendet wird, bei der ein erster metallischer Endlosriemen (23) mit einer verspiegelten Oberfläche um eine erste Kühlwalze (21), die mit einem elastischen Element (18) an der Oberfläche versehen ist, sowie um eine zweite Kühlwalze (22) geschlungen ist, und wobei ein zweiter metallischer Endlosriemen (26) mit einer verspiegelten Oberfläche vorgesehen ist, welcher um eine dritte Kühlwalze (24) und eine vierte Kühlwalze (25) geschlungen ist, wobei diese Endlosriemen nebeneinander herlaufen, um eine geschmolzene thermoplastische Kunststoffolie (11) zwischen sich einzuschließen, und wobei Mittel (28, 29) zur Beaufschlagung eines Zusatzdruckes für beide metallische Endlosriemen (23, 26) bereitgestellt sind in einem Bereich, wo die beiden metallischen Endlosriemen nebeneinander herlaufen, um die geschmolzene thermoplastische Kunststoffolie (11) zwischen sich einzuschließen, und welches die folgenden Schritte umfaßt:

Zuführen der geschmolzenen thermoplastischen Kunststoffolie (11) in den Bereich zwischen den ersten und zweiten Endlosriemen (23, 26), um den ersten Endlosriemen (23) zu berühren, wobei die erste Kühlwalze (21), der zweite Endlosriemen (26) sowie die dritte Kühlwalze (24) zu ungefähr derselben Zeit berührt werden, während die Temperatur der metallischen Endlosriemen (23, 26), welche direkt die geschmolzene thermoplastische Kunststofffolie (11) berühren, auf weniger als 50°C und mehr als Null gehalten wird, wobei die Kühlwalzen (21, 22, 24, 25), welche mit den metallischen Endlosriemen (22, 26) in Berührung stehen, mit Temperaturanpassungsmitteln versehen sind;

Kontaktabwalzen der verspiegelten Oberfläche und Abkühlen der geschmolzenen thermoplastischen Kunststoffolie (11) durch die erste und dritte Kühlwalze (23, 26) über einen Bereich eines Winkels θ1 von der Mitte sowohl der ersten als auch der dritten Walze (21, 24), während das elastische Element (11) elastisch verformt wird durch eine Anpreßkraft zwischen der ersten und dritten Kühlwalze (21, 24), wodurch sich ein Anpreßdruck an der verspiegelten Oberfläche von 0,1 MPa bis 20 MPa ergibt; und

anschließendes Abkühlen der geschmolzenen thermoplastischen Kunststoffolie (11) durch Kontaktabwalzen der geschmolzenen thermoplastischen Kunststoffolie (11) auf der verspiegelten Oberfläche durch die Mittel (28, 29) zur Beauftragung eines Zusatzdrucks, in einem Bereich, wo die beiden metallischen Endlosriemen (24, 26) nebeneinanderher verlaufen mit einem Anpreßdruck zwischen 0,01 MPa bis 0,5 MPa;

wobei die Kunststoffolie (11) auf eine Temperatur von weniger als 50°C abgekühlt wird.

3. Das Verfahren zum Herstellen einer thermoplastischen Kunststoffolie nach Anspruch 2, wobei die dritte Kühlwalze (24) mit dem elastischen Element (18) auf der Oberfläche der dritten Kühlwalze bedeckt ist..

4. Das Verfahren zur Herstellung einer thermoplastischen Kunststoffolie gemäß Anspruch 2, wobei die Mittel zur Bereitstellung eines zusätzlichen Druckes für beide metallischen Endlosriemen zumindest ein Paar von Walzen (28, 29) sind, welche angebracht sind, um die beiden metallischen Endlosriemen (23, 26) zwischen sich einzuschließen.

5. Das Verfahren zur Herstellung einer thermoplastischen Kunststoffolie gemäß Anspruch 2, wobei die Mittel zur Beaufschlagung eines zusätzlichen Druckes für die beiden metallischen Endlosriemen eine Walze (31) sind, welche so angebracht ist, daß beide metallischen Endlosriemen (23, 26) dazugebracht werden, sich zwischen der ersten und zweiten Walze (21, 22) oder der dritten und vierten Walze (23, 25) zu krümmen.

6. Vorrichtung zur Herstellung einer thermoplastischen Kunststoffolie, welche umfaßt:

einen metallischen Endlosriemen, (15) mit einer verspiegelten Oberfläche, welcher um eine erste Kühlwalze (13), die mit einem elastischen Element (18) bedeckt ist, sowie eine zweite Kühlwalze (14) geschlungen ist;

eine dritte Kühlwalze (16) mit einer verspiegelten Oberfläche, welche die erste Kühlwalze (13) durch eine geschmolzene thermoplastische Kunststoffolie (11) berührt, und wobei der metallische Endlosriemen (15) so ausgelegt ist, daß er die geschmolzene thermoplastische Kunststoffolie (11) hält, welche durch diesen metallischen Endlosriemen (15) gepreßt wird;

wobei die erste, zweite und dritte Kühlwalze (13, 14, 16) so angeordnet sind, daß die thermoplastische Kunststofffolie (11) zunächst zwischen der dritten Kühlwalze (16) und dem metallischen Endlosriemen (15) sowie der ersten Kühlwalze (13) in einem Bereich eines Winkels θ1 von der Mitte von sowohl der ersten als auch der dritten Walze (13, 16) aus mit Mitteln gepreßt wird, welche bereitgestellt werden, um einen Anpreßdruck an der verspiegelten Oberfläche zwischen 0,1 MPa bis 20 MPa bereitzustellen, und anschließend festgehalten wird zwischen der dritten Walze (16) und dem metallischen Endlosriemen (15) in einem Bereich eines Winkels θ2 von der Mitte der dritten Walze (16) aus mit Mitteln, welche bereitgestellt werden zum Aufbringen eines Druckes zwischen 0,01 MPa bis 0,5 MPa an der verspiegelten Oberfläche, und anschließend nur in Kontakt mit dem metallischen Endlosriemen (15) weitertransportiert wird und dann kontaktgewalzt wird an der zweiten Kühlwalze (14) durch den metallischen Endlosriemen (15) hindurch in einem Bereich eines Winkels θ3 von der Mitte der Kühlwalze (14) aus, und wobei die dritte Kühlwalze (16) mit Temperaturanpassungsmitteln versehen ist, und Mittel bereitgestellt sind, um die Temperatur des metallischen Endlosriemens (15), welcher direkt die geschmolzene thermoplastische Kunststofffolie (11) berührt, sowie der dritten Kühlwalze (16) bei weniger als 50°C und mehr als Null zu halten, um die Kunststoffolie (11) auf eine Temperatur von weniger als 50°C zu kühlen.

7. Die Herstellvorrichtung für eine thermoplastische Kunststoffolie (11) gemäß Anspruch 6, wobei das elastische

**EP 0 803 340 B1**

Element weniger als 60° an Härte gemäß der Norm JIS K6301 A aufweist.

**Revendications**

1.  Procédé de fabrication d'une feuille en résine thermoplastique (11) utilisant un dispositif de fabrication dans lequel une bande métallique sans fin (15), ayant une surface extérieure spéculaire, s'enroule sur un premier rouleau de refroidissement (13) recouvert sur sa surface d'un élément élastique (18) et un deuxième rouleau de refroidissement (14) et entre ceux-ci, et un troisième rouleau de refroidissement (16) ayant une surface extérieure spéculaire se trouve en contact avec le premier rouleau de refroidissement par l'intermédiaire de la feuille en résine thermoplastique fondue (11), et la bande métallique sans fin (15) est conçue pour maintenir la feuille en résine thermoplastique fondue (11) pressée contre la bande métallique sans fin (15), comprenant les étapes consistant à :

    guider la feuille en résine thermoplastique fondue (11) dans la zone séparant les premier et troisième rouleaux de refroidissement (13, 16) pour venir en contact avec la bande métallique sans fin (15), ce film se trouvant en contact avec le premier rouleau de refroidissement (13) et le troisième rouleau de refroidissement (16) approximativement au même moment ;
    entraîner par roulement et contact la surface extérieure et refroidir la feuille en résine thermoplastique fondue (11) par les premier et troisième rouleaux de refroidissement (13, 16) sur une zone définie par un angle θ1 partant du centre de chacun des premier et troisième rouleaux (13, 16), tandis que l'élément élastique (18) est déformé élastiquement par une force de pression s'exerçant entre les premier et troisième rouleaux de refroidissement (13, 16) et donnant une pression superficielle de 0,1 MPa à 20,0 MPa ; et
    refroidir, ensuite, la feuille en résine thermoplastique fondue par entraînement par roulement et contact de la feuille en résine thermoplastique fondue (11) sur sa surface extérieure contre le troisième rouleau de refroidissement (16) à l'aide de la bande métallique sans fin (15) sur un angle θ2 partant du centre du troisième rouleau (16) avec une pression superficielle de 0,01 MPa à 0,5 MPa ;
    procédé dans lequel la température de la bande métallique sans fin (15) en contact direct avec la feuille en résine thermoplastique fondue (11) et le troisième rouleau de refroidissement (16) est maintenue inférieure à 50°C et supérieure à zéro ;
    le troisième rouleau de refroidissement (16) est muni d'un moyen d'ajustement de la température et la feuille en résine (11) est refroidie à une température inférieure à 50°C.

2.  Procédé de fabrication d'une feuille en résine thermoplastique utilisant un dispositif de fabrication dans lequel une première bande métallique sans fin (23), comprenant une surface extérieure spéculaire, enroulée sur un premier rouleau de refroidissement (21) recouvert sur sa surface d'un élément élastique (18), et un deuxième rouleau de refroidissement (22) et entre ceux-ci, et une seconde bande métallique sans fin (26) comprenant une surface extérieure spéculaire, enroulée sur un troisième rouleau de refroidissement (24) et un quatrième rouleau de refroidissement (25) et entre ceux-ci sont disposées pour avancer en contact mutuel et maintenir entre elles une feuille en résine thermoplastique fondue (11), et un moyen d'application de pression additionnelle (28, 29) pour les deux bandes métalliques sans fin (23, 26) est disposé dans une section où les deux bandes métalliques sans fin avancent en contact mutuel pour maintenir entre elles la feuille en résine thermoplastique fondue (11) comprenant les étapes consistant à :

    guider la feuille en résine thermoplastique fondue (11) dans la zone séparant les première et seconde bandes métalliques sans fin (23, 26) pour venir en contact avec la première bande sans fin (23), bande en contact avec le premier rouleau de refroidissement (21), et la seconde bande métallique sans fin (26), bande en contact avec le troisième rouleau de refroidissement (24), approximativement au même moment, tandis que la température des bandes métalliques sans fin (23, 26) en contact direct avec la feuille en résine thermoplastique fondue (11) est maintenue inférieure à 50°C et supérieure à zéro, les rouleaux de refroidissement (21, 22, 24, 25) en contact avec lesdites bandes métalliques sans fin (23, 26) étant munis d'un moyen d'ajustement de la température ;
    entraîner par roulement et contact la surface extérieure et refroidir la feuille en résine thermoplastique fondue (11) par les premier et troisième rouleaux de refroidissement (23, 26) sur une zone définie par un angle θ1 partant du centre de chacun des premier et troisième rouleaux (21, 24), tandis que l'élément élastique (18) est déformé élastiquement par une force de pression s'exerçant entre les premier et troisième rouleaux de refroidissement (21, 24) donnant une pression superficielle de 0,1 MPa à 20,0 MPa ; et
    refroidir, ensuite, la feuille en résine thermoplastique fondue (11) par entraînement par roulement et contact de la feuille en résine thermoplastique fondue (11) sur sa surface extérieure par le moyen d'application de pression additionnelle (28, 29) dans une section où les deux bandes métalliques sans fin (24, 26) avancent en contact mutuel avec une pression superficielle de 0,01 MPa à 0,5 MPa ;

procédé dans lequel la feuille en résine (11) est refroidie à une température inférieure à 50°C.

3. Procédé de fabrication de la feuille en résine thermoplastique selon la revendication 2, dans lequel le troisième rouleau de refroidissement (24) est recouvert sur sa surface d'un élément élastique (18).

4. Procédé de fabrication de la feuille en résine thermoplastique selon la revendication 2, dans lequel le moyen d'application de pression additionnelle pour les deux bandes métalliques sans fin est constitué par au moins une paire de rouleaux (28, 29) située de manière à maintenir entre eux les deux bandes métalliques sans fin (23, 26).

5. Procédé de fabrication de la feuille en résine thermoplastique selon la revendication 2, dans lequel le moyen d'application de pression additionnelle pour les deux bandes métalliques sans fin est un rouleau (31) situé de façon à amener les deux bandes métalliques sans fin (23,26) à s'incurver entre les premier et deuxième rouleaux (21, 22) ou entre les troisième et quatrième rouleaux (23, 25).

6. Dispositif de fabrication d'une feuille en résine thermoplastique comprenant :

une bande métallique sans fin (15) comprenant une surface extérieure spéculaire qui est enroulée sur un premier rouleau de refroidissement (13), recouvert d'un élément élastique (18) et un deuxième rouleau de refroidissement (14) et entre ceux-ci ; et
un troisième rouleau de refroidissement (16) comprenant une surface extérieure spéculaire et venant en contact avec ledit premier rouleau de refroidissement (13) à travers la feuille en résine thermoplastique fondue (11) et avec ladite bande métallique sans fin (15) qui est conçue pour maintenir ladite feuille en résine thermoplastique fondue (11) pressée par ladite bande métallique sans fin (15) ;

dans lequel les premier, deuxième et troisième rouleaux de refroidissement (13, 14, 16) sont agencés de telle sorte que la feuille en résine thermoplastique (11) est tout d'abord comprimée entre le troisième rouleau de refroidissement (16) et la bande métallique sans fin (15) et le premier rouleau de refroidissement (13) dans une zone définie par un angle θ1 partant du centre de chacun des premier et troisième rouleaux (13, 16) avec un moyen prévu pour appliquer une pression superficielle de 0,1 MPa à 20 MPa, puis ladite feuille est maintenue entre le troisième rouleau (16) et la bande métallique sans fin (15) dans une zone définie par un angle θ2 partant du centre du troisième rouleau (16) avec un moyen prévu pour appliquer une pression superficielle de 0,01 MPa à 0,5 MPa, ensuite elle effectue un parcours en contact avec la bande métallique sans fin (15), puis elle est entraînée par roulement et contact sur le deuxième rouleau de refroidissement (14) par l'intermédiaire de la bande métallique sans fin (15) dans une zone définie par un angle θ3 partant du centre du rouleau de refroidissement (14) et dans lequel le troisième rouleau de refroidissement (16) est muni d'un moyen d'ajustement de la température et des moyens sont prévus pour maintenir la température de la bande métallique sans fin (15) en contact direct avec la feuille en résine thermoplastique fondue (11) et du troisième rouleau de refroidissement (16) au-dessous de 50°C et au-dessus de zéro, pour refroidir la feuille en résine (11) à une température inférieure à 50°C.

7. Dispositif de fabrication d'une feuille en résine thermoplastique (11) selon la revendication 6, dans lequel ledit élément élastique a une dureté de moins de 60° en se référant à une norme de JIS K6301 A.

F I G. 1

# F I G.2

# F I G.3

# F I G. 4